# EUROPÄISCHE PATENTANMELDUNG

(11) **EP 0 689 269 A1**
(43) Veröffentlichungstag der Anmeldung: **27.12.1995**
(21) Anmeldenummer: 95250140.1
(22) Anmeldetag: 12.06.1995
(51) Int. Cl.: H02B 13/075

(54) **Vorrichtung zur Verbindung eines Hochspannungsleiters mit Erdpotential**

(30) Priorität: 23.06.1994 DE 9410812 U
(71) Anmelder: SIEMENS AKTIENGESELLSCHAFT, D-80333 München (DE)
(72) Erfinder: Seubert, Ingo, D-13583 Berlin (DE); Pircher, Christian, D-13629 Berlin (DE)

(57) **Zusammenfassung**

Bei einer metallgekapselten Hochspannungsschaltanlage mit einem innerhalb einer Metallkapselung (1) angeordneten Hochspannungsleiter (4) ist eine Erdungsmöglichkeit dadurch vorgesehen, daß mit einem auf einen Gehäuseflansch (2) aufsetzbaren Gehäusedeckel (8) ein Kontaktstück (9) leitend verbunden ist, das mit dem Aufsetzen des Gehäusedeckels (8) auf den Gehäuseflansch (2) der Metallkapselung (1) mit dem Hochspannungsleiter (4) in elektrisch leitende Verbindung bringbar ist. An dem Hochspannungsleiter (4) kann im Bereich des Gehäuseflansches (2) ein Gegenkontaktstück (5) vorgesehen sein.

## Beschreibung

Die Erfindung bezieht sich auf eine Vorrichtung zur Verbindung eines in einem geerdeten metallischen Kapselungsgehäuse im Bereich eines Gehäuseflansches angeordneten Hochspannungsleiters mit Erdpotential.

Eine derartige Vorrichtung ist beispielsweise aus dem Siemens-Prospekt "SF₆-isolierte Schaltanlagen für 123 bis 525 kV", Seite 20 (Schaltanlage Typ 8D2) bekannt. Es handelt sich dabei um die verbreitete Art eines Erdungsschalters, der innerhalb des Gasraums einer gekapselten elektrischen Hochspannungs-Schaltanlage angeordnet und mittels eines Antriebs betätigbar ist.

Der vorliegenden Erfindung liegt demgegenüber die Aufgabe zugrunde, für einen innerhalb eines Kapselungsgehäuses angeordneten Hochspannungsleiter eine konstruktiv einfache und kostengünstige Vorrichtung zur Verbindung des Hochspannungsleiters mit Erdpotential zu schaffen.

Die Aufgabe wird erfindungsgemäß gelöst durch einen auf den Gehäuseflansch aufsetzbaren Gehäusedeckel und ein mit diesem mechanisch starr verbundenes Kontaktstück, das durch Aufsetzen des Gehäusedeckels auf den Gehäuseflansch mit dem Hochspannungsleiter elektrisch leitend verbindbar ist.

Die Erfindung ermöglicht ein einfaches Erden des Hochspannungsleiters dadurch, daß ein auf einem entsprechenden Gehäuseflansch aufliegender Gehäusedeckel ohne eine erfindungsgemäße Vorrichtung ausgetauscht wird durch einen erfindungsgemäßen Gehäusedeckel mit einem mit diesem mechanisch starr verbundenen Kontaktstück und daß durch Aufsetzen des erfindungsgemäßen Gehäusedeckels der Hochspannungsleiter mit dem Kontaktstück leitend verbunden wird.

Das Kontaktstück kann beispielsweise dauernd mit dem Gehäusedeckel und über diesen im Betriebsfall mit dem Kapselungsgehäuse leitend verbunden sein.

Das Kontaktstück kann auch isoliert durch den Gehäusedeckel durchgeführt und außerhalb des Gehäuses leitend mit dem Gehäusedeckel oder dem Kapselungsgehäuse verbindbar sein.

Durch die einfache Ausgestaltung der Erfindung können Erdungsschalter, die mit einem eigenen Antrieb ausgestattet und daher aufwendig sind, teilweise eingespart werden.

Eine vorteilhafte Ausgestaltung der Erfindung sieht vor, daß ein mit dem Hochspannungsleiter verbundenes Gegenkontaktstück vorgesehen ist.

Ein solches Gegenkontaktstück kann beispielsweise als mit dem Hochspannungsleiter verbundendes Tulpenkontaktstück ausgebildet sein. Dabei ist zu beachten, daß das Gegenkontaktstück nicht zu weit über den Hochspannungsleiter hinaussteht, so daß in dem Fall, daß keine Erdverbindung vorhanden ist, eine ausreichende dielektrische Festigkeit gegeben ist.

Das mit dem Gehäusedeckel verbundene Kontaktstück kann vorteilhaft stiftförmig ausgebildet sein, um mit einem entsprechenden Gegenkontaktstück des Hochspannungsleiters zusammenzuwirken.

Es kann außerdem vorteilhaft vorgesehen sein, daß das mit dem Gehäusedeckel verbundene Kontaktstück derart ausgebildet ist, daß es einen insbesondere zylindrischen Hochspannungsleiter in dem Fall, daß der Gehäusedeckel auf den Gehäuseflansch aufgesetzt ist, federnd umgreift.

Dies ist besonders dann günstig, wenn der Hochspannungsleiter im Bereich der erfindungsgemäßen Vorrichtung als einfacher zylindrischer Leiter ohne ein besonderes Gegenkontaktstück vorliegt. Dann kann das mit dem Gehäusedeckel verbundene Kontaktstück gabelförmig ausgebildet sein und den Hochspannungsleiter federnd umgreifen. Hierdurch werden besondere Gegenkontaktstücke an dem Hochspannungsleiter eingespart. In dieser Version eignet sich die erfindungsgemäße Vorrichtung auch besonders gut für Rohrleiter.

Eine weitere vorteilhafte Ausgestaltung der Erfindung sieht vor, daß das Kontaktstück isoliert durch den Gehäusedeckel durchgeführt und an dessen Außenseite wahlweise mit dem Gehäusedeckel oder einem Meßanschluß leitend verbindbar ist.

Diese Ausführungsform bringt als Vorteil mit sich, daß das Kontaktstück außer dem Erdungszweck auch als Meßanschluß benutzt werden kann.

Im folgenden wird die Erfindung anhand eines Ausführungsbeispiels in einer Zeichnung gezeigt und anschließend beschrieben.

Dabei zeigt
Figur 1 die erfindungsgemäße Vorrichtung,
Figur 2 ein Kapselungsgehäuse schematisch in betriebsmäßigem Zustand
Figur 3 die Ausbildung der erfindungsgemäßen Vorrichtung mit einem gabelförmigen Kontaktstück,
Figur 4 einen Gehäusedeckel mit isoliert durchgeführtem Kontakt.

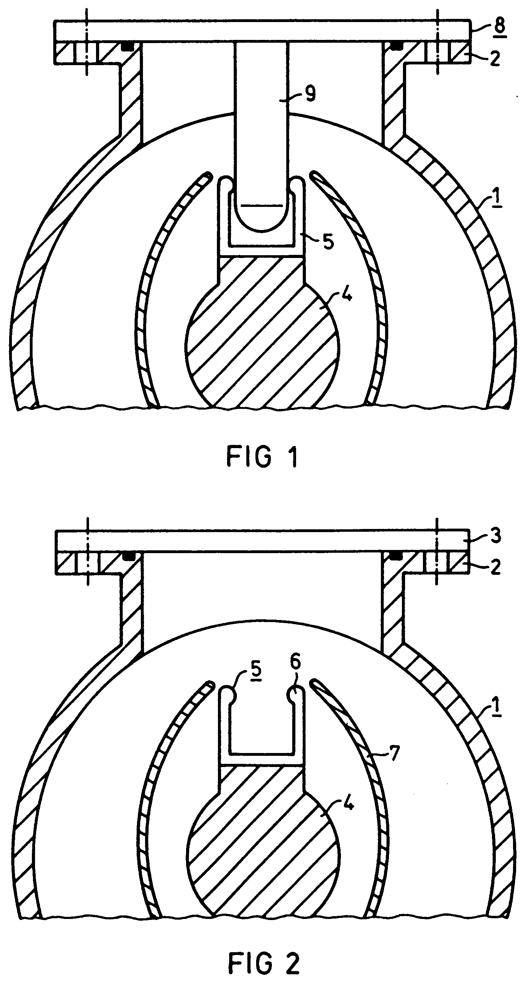

In der Figur 1 ist das Kapselungsgehäuse aus der Figur 2 mit einem erfindungsgemäßen Gehäusedeckel 8 dargestellt, mit dem ein stiftförmiges Kontaktstück 9 starr verbunden ist. Wenn der Gehäusedeckel 8 auf dem Flansch 2 des Kapselungsgehäuses 1 aufgesetzt ist, ragt das stiftförmige Kontaktstück 9 in das Gegenkontaktstück 5 hinein, so daß über das Gegenkontaktstück 5, das Kontaktstück 9, den Gehäusedeckel 8 und den Flansch 2 eine leitende Verbindung zwischen dem Hochspannungsleiter 4 und dem geerdeten Kapselungsgehäuse 1 besteht. Das Kontaktstück 9 kann beispielsweise auf den Gehäusedeckel 8 aufgeschweißt, leitend an diesen angeklebt, einstückig mit diesem gegossen oder an dieses angeschraubt sein.

Die Figur 2 zeigt ein metallisches Kapselungsgehäuse 1 mit einem Flansch 2, auf den ein herkömmlicher Gehäusedeckel 3 gasdicht aufgesetzt ist.
Im Inneren des Kapselungsgehäuses 1 ist Hochspannungsleiter 4 angeordnet, der ein Gegenkontaktstück 5 mit federnden Kontaktfingern 6 aufweist und durch eine Feldelektrode 7 elektrisch abgeschirmt ist.

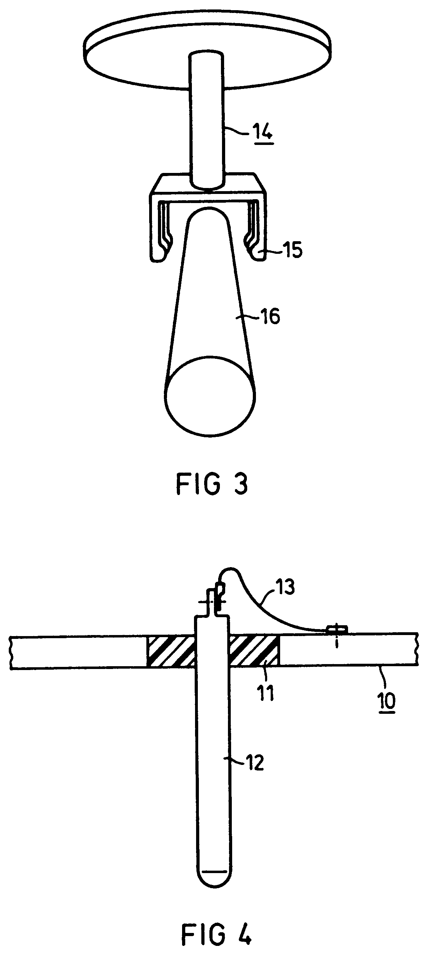

Es ist auch denkbar, das Kontaktstück isoliert durch den Gehäusedeckel durchzuführen, wie in der Figur 4 dargestellt. Der zentrale Teil des Gehäusedeckels 10 ist dort aus einem Kunststoffteil 11 hergestellt, in das das stiftförmige Kontaktstück 12 insbesondere gasdicht eingegossen ist. Auf der Außenseite des Gehäusedeckels 10 ist das Kontaktstück 12 über einen Leiter 13 mit Erdpotential an dem Gehäusedeckel 10 verbunden. Das Kontaktstück 12 ist aber wahlweise auch mit einem Meßanschluß verbindbar.

Das Kontaktstück 14 kann auch einen gabelförmigen federnden Kontakt 15 aufweisen, der auf einen zylindrischen Hochspannungsleiter 16 aufklemmbar ist. In diesem Fall braucht an dem Hochspannungsleiter 16 kein Gegenkontaktstück vorgesehen zu sein.

Die gasdichte Gestaltung des erfindungsgemäßen Erdungs-Deckels ist nicht zwingend notwendig, sofern die Einrichtung bei einer nicht mit Löschgas gefüllten Hochspannungsschaltanlage eingesetzt wird.

Für mehrpolig gekapselte Anlagen ist es denkbar, mehre Kontaktstücke an einem Deckel zu befestigen.

## Patentansprüche

1. Vorrichtung zur Verbindung eines in einem geerdeten, metallischen Kapselungsgehäuse (1) im Bereich eines Gehäuseflansches (2) angeordneten Hochspannungsleiters (4) mit Erdpotential,
**gekennzeichnet durch** einen auf den Gehäuseflansch (2) aufsetzbaren Gehäusedeckel (3) und ein mit diesem mechanisch starr verbundenes Kontaktstück (9, 12, 15), das durch Aufsetzen des Gehäusedeckels (3) auf den Gehäuseflansch (2) mit dem Hochspannungsleiter (4) elektrisch leitend verbindbar ist.

2. Vorrichtung nach Anspruch 1,
**dadurch gekennzeichnet,** daß
ein mit dem Hochspannungsleiter (4) verbundenes Gegenkontaktstück (5) vorgesehen ist.

3. Vorrichtung nach Anspruch 1 oder 2,
**dadurch gekennzeichnet,** daß
das mit dem Gehäusedeckel (3) verbundene Kontaktstück (9, 12) stiftförmig ausgebildet ist.

4. Vorrichtung nach Anspruch 1 oder 2,
**dadurch gekennzeichnet,** daß
das mit dem Gehäusedeckel (3) verbundene Kontaktstück (14, 15) derart ausgebildet ist, daß es einen insbesondere zylindrischen Hochspannungsleiter (4) in dem Fall, daß der Gehäusedeckel (3) auf den Gehäuseflansch (2) aufgesetzt ist, federnd umgreift.

5. Vorrichtung nach Anspruch 1 oder einem der folgenden,
**dadurch gekennzeichnet,** daß
das Kontaktstück (12) isoliert durch den Gehäusedeckel (10) durchgeführt und an dessen Außenseite wahlweise mit dem Gehäusedeckel (10) oder einem Meßanschluß leitend verbindbar ist.
